# EUROPEAN PATENT SPECIFICATION

(11) **EP 2 836 011 B1**
(45) Date of publication and mention of the grant of the patent: **25.05.2016**
(21) Application number: 13306143.2
(22) Date of filing: 09.08.2013
(51) Int. Cl.: H04W 36/00, H04W 16/32, H04W 36/02, H04W 36/08

(54) **Apparatuses, Methods and Computer Programs for Base Station Transceivers and for a Mobile Transceiver Relating to Change of Payload Data Reception**
Vorrichtungen, Verfahren und Computerprogramme für einen Basisstations-Sender-Empfänger und für einen mobilen Sender-Empfänger zur Änderung des Nutzdatenempfangs
Appareils, procédés et programmes informatiques pour des émetteurs-récepteurs de station de base et un émetteur-récepteur mobile se rapportant à un changement de la réception de données de charge utile

(43) Date of publication of application: 11.02.2015
(73) Proprietor: ALCATEL LUCENT, 92100 Boulogne-Billancourt (FR)
(72) Inventor: Worrall, Chandrika K., Swindon, Wiltshire SN5 DJ7 (GB)
(74) Representative: Berthier, Karine

(56) References cited:
- WO-A1-2011/137784
- GB-A- 2 479 376
- NTT DOCOMO: "Scenario and Candidate Technologies for Small Cell Enhancement", 3GPP DRAFT; R1-130743 SCE SCENARIOS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian; 20130128 - 20130201 1 February 2013 (2013-02-01), XP050663975, Retrieved from the Internet: URL:http://www.3gpp.org/ftp/tsg_ran/WG1_RL 1/TSGR1_72/Docs [retrieved on 2013-02-01]
- HIROYUKI ISHII ET AL: "A novel architecture for LTE-B :C-plane/U-plane split and Phantom Cell concept", GLOBECOM WORKSHOPS (GC WKSHPS), 2012 IEEE, IEEE, 3 December 2012 (2012-12-03), pages 624-630, XP032341446, DOI: 10.1109/GLOCOMW.2012.6477646 ISBN: 978-1-4673-4942-0
- ALCATEL-LUCENT ET AL: "User plane interruption handling during offload bearer modification", 3GPP DRAFT; R2-132764, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Barcelona, Spain; 20130819 - 20130823 10 August 2013 (2013-08-10), XP050718506, Retrieved from the Internet: URL:http://www.3gpp.org/ftp/tsg_ran/WG2_RL 2/TSGR2_83/Docs [retrieved on 2013-08-10]

## Description

### Technical Field

Embodiments relate to apparatuses, methods and computer programs for base station transceivers and a mobile transceiver, more particularly, but not exclusively to management and signaling to effect a change of payload data reception of a mobile transceiver between two base station transceivers in a wireless communication network.

### Background

This section introduces aspects that may be helpful in facilitating a better understanding of the inventions. Accordingly, the statements of this section are to be read in this light and are not to be understood as admissions about what is in the prior art or what is not in the prior art.

In mobile communication networks heterogeneous architectures become more and more important. Heterogeneous Networks (HetNets) are networks, which utilize cell types of different sizes, as, for example, macro cells and small cells, such as metro cells, micro or pico cells, and femto cells. Such cells are established by base station transceivers for which their coverage areas are determined by their transmission power and interference condition.

Small cells are cells having a smaller coverage area than macro cells. In some network scenarios the small cells' coverage area can be surrounded by the coverage area of a macro cell. The small cells can be deployed to extend the capacity of the network.

With regard to standardization, within the 3rd Generation Partnership Project (3GPP), HetNets have been added to the scope of the Long Term Evolution-Advanced (LTE-A) work item. A study item was approved for investigation of small cell deployment in particular for handling the capacity needs in high traffic areas (such as hot spot areas).

Traffic offloading in high capacity areas via small cells may be seen as a useful practical scenario by many operators. One deployment scenario under investigation is the dense small cell scenario where up to 16 small cells could be located within a macro cell coverage. Small cells may be assumed to be on a single frequency, which may be different from the frequency of a macro cell.

Document US2014/0004863 A1 describes a concept for splitting a control plane connection and a user plane connection between a macro and a pico base station.

### Summary of illustrative Embodiments

Some simplifications may be made in the following summary, which is intended to highlight and introduce some aspects of the various exemplary embodiments, but such simplifications are not intended to limit the scope of the inventions. Detailed descriptions of a preferred exemplary embodiment adequate to allow those of ordinary skill in the art to make and use the inventive concepts will follow in later sections.

Various embodiments provide apparatuses, methods and computer programs for base station transceivers and for a mobile transceiver for change of payload data reception at a mobile transceiver. Embodiments may enable management and signaling of direct payload reception change between two base station transceivers in a wireless communication network. In some embodiments dual connectivity may be established between the macro and small cells. A mobility anchoring point for a mobile transceiver may be kept at a macro cell, for example, a macro cell base station transceiver may control a handover or change of payload transmission between two small cells. A mobile transceiver, or User Equipment (UE), may move through a network from a first cell to a second cell, however, in some embodiments the mobility anchoring may be kept at another base station transceiver, e.g. a macro cell base station transceiver. A bearer service, e.g. a traffic bearer, which is supported by a first cell, may be re-allocated to a second cell during a cell change.

Embodiments provide an apparatus for a first base station transceiver. The apparatus is operable to provide information related to changing payload data reception of a mobile transceiver from a second base station transceiver to a third base station transceiver. The apparatus comprises an interface, which is operable to communicate with the second and third base station transceivers. The apparatus further comprises a transceiver module operable to communicate with the mobile transceiver. The apparatus further comprises a control module operable to control the interface and the transceiver module. The control module is further operable to receive information related to a signal measurement from the mobile transceiver using the transceiver module. The information related to the signal measurement indicates that the mobile transceiver is capable of receiving data from the third base station transceiver. The control module is further operable to provide information related to payload data forwarding to the second base station transceiver using the interface. The information related to payload data forwarding indicates to forward payload data for the mobile transceiver to the third base station transceiver. The control module is further operable to provide information related to a mobile reconfiguration to the mobile transceiver using the transceiver module. The information related to the mobile reconfiguration indicates to receive payload data from the third base station transceiver.

Embodiments further provide an apparatus for a second base station transceiver. The apparatus is operable to receive information related to changing payload data reception of the mobile transceiver from the first base station transceiver. The information related to changing payload data reception indicates a payload reception change of the mobile transceiver from the second base station transceiver to the third base station transceiver.

The apparatus comprises an interface, which is operable to communicate with the first base station transceiver and the third base station transceiver. The apparatus further comprises a control module operable to control the interface. The control module is further operable to receive information related to payload data forwarding to the third base station transceiver using the interface. The information related to payload data forwarding indicates to forward payload data for the mobile transceiver to the third base station transceiver. The control module is further operable to forward the payload data for the mobile transceiver to the third base station transceiver.

Embodiments may enable forwarding of payload data between two base station transceivers. Embodiments may enable efficient signaling and data forwarding as an intermediate utilization of resources at another base station transceiver may be reduced or avoided.

Embodiments further provide an apparatus for the mobile transceiver. The mobile transceiver receives payload data from the second base station transceiver. The apparatus comprises a transceiver module, which is operable to communicate with the first base station transceiver, the second base station transceiver, and the third base station transceiver. The apparatus further comprises a control module operable to control the transceiver module. The control module is further operable to receive information related to changing payload data reception from the first base station transceiver. The information related to changing payload data reception indicates to change payload data reception from the second base station transceiver to the third base station transceiver. The control module is further operable to configure payload data reception from the third base station transceiver while receiving payload data from the second base station transceiver. The control apparatus is further operable to provide information relating to an acknowledgment of a configured payload data reception from the third base station transceiver to at least one of the first, the second or the third base station transceiver.

Embodiments may enable a change of payload data reception of a mobile transceiver between two base station transceivers with a reduced or even no interruption in data transmission, as the mobile transceiver may configure a payload connection with the target (third) base station transceiver while still receiving payload data from the originating (second) base station transceiver.

Embodiments provide a method for the first base station transceiver, which is operable to provide information related to changing payload data reception of the mobile transceiver from the second base station transceiver to the third base station transceiver. The method comprises receiving information related to a signal measurement from the mobile transceiver. The information related to the signal measurement indicates that the mobile transceiver is capable of receiving payload data from the third base station transceiver. The method further comprises providing information related to payload data forwarding to the second base station transceiver. The information related to payload data forwarding indicates to forward payload data for the mobile transceiver to the third base station transceiver. The method further comprises providing information related to a mobile reconfiguration to the mobile transceiver. The information related to the mobile reconfiguration indicates to receive payload data from the third base station transceiver.

Embodiments further provide a method for the second base station transceiver, which is operable to receive information related to changing payload data reception of a mobile transceiver from the first base station transceiver. The information related to changing payload data reception indicates a change of payload data reception of the mobile transceiver from the second base station transceiver to the third base station transceiver.

The method comprises receiving information related to payload data forwarding to the third base station transceiver. The information related to payload data forwarding indicates to forward payload data for the mobile transceiver to the third base station transceiver. The method further comprises forwarding payload data for the mobile transceiver to the third base station transceiver.

Embodiments further provide a method for the mobile transceiver. The mobile transceiver receives payload data from the second base station transceiver. The method comprises receiving the payload data from the second base station transceiver and receiving information related to changing payload data reception from the first base station transceiver. The information related to changing payload data reception indicates to change payload data reception from the second base station transceiver to the third base station transceiver. The method further comprises configuring payload data reception from the third base station transceiver while receiving payload data from the second base station transceiver. The method further comprises providing information relating to an acknowledgment of a configured payload data reception from the third base station transceiver to at least one of the first, the second or the third base station transceiver.

Embodiments further provide a computer program having a program code for performing one or more of the above described methods, when the computer program is executed on a computer or processor. A further embodiment is a computer readable storage medium storing instructions which, when executed by a computer, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which
Fig. 1 illustrates embodiments of apparatuses for a first and a second base station transceiver and a mobile transceiver;
Fig. 2 illustrates an example network scenario with embodiments;
Fig. 3 illustrates an bearer split scenario in an embodiment;
Fig. 4 illustrates a message sequence chart of a downlink traffic bearer change from a small cell eNB to a macro cell eNB;
Fig. 5 illustrates a message sequence chart of a downlink traffic bearer change from a macro cell eNB to a small cell eNB;
Fig. 6 illustrates a message sequence chart of a traffic bearer change from a first small cell eNB to a second small cell eNB in an embodiment;
Fig. 7 illustrates a block diagram of a flow chart of an embodiment of a method for a first base station transceiver;
Fig. 8 illustrates a block diagram of a flow chart of an embodiment of a method for a second base station transceiver; and
Fig. 9 illustrates a block diagram of a flow chart of an embodiment of a method for a mobile transceiver.

### Description of Embodiments

Various example embodiments will now be described more fully with reference to the accompanying drawings in which some example embodiments are illustrated. In the figures, the thicknesses of lines, layers or regions may be exaggerated for clarity. Broken or dotted lines may indicate optional features.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following embodiments of apparatuses, methods and computer programs will be described. The apparatuses, method, or computer programs may be adapted to or configured for operating in a mobile communication system, which may, for example, correspond to one of the 3GPP-standardized mobile communication networks, where the term mobile communication system is used synonymously to mobile communication network. The mobile or wireless communication system may correspond to, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, a laptop, a notebook, a personal computer, a Personal Digital Assistant (PDA), a Universal Serial Bus (USB) -stick, a car, etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, a remote radio head, a transmission point etc., which may be further subdivided in a remote unit and a central unit.

A mobile transceiver can be associated with the base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

In other words, in embodiments the mobile communication system may correspond to a HetNet, which utilizes different cell types, i.e. Closed Subscriber Group (CSG) cells and open cells, and cells of different sizes, as, for example, macro cells and small cells, where the coverage area of a small cell is smaller than the coverage area of a macro cell. A small cell may correspond to a metro cell, a micro cell, a pico cell, a femto cell, etc. Such cells are established by base station transceivers for which their coverage areas are determined by their transmission power and interference condition. In some embodiments a small cell's coverage area can at least partly be surrounded by the coverage area of a macro cell established by another base station transceiver. The small cells can be deployed to extend the capacity of the network. A metro cell may therefore be used to cover a smaller area than a macro cell, e.g. a metro cell may cover a street or a section in a metropolitan area. For a macro cell the coverage area may have a diameter in the order of one or more kilometers, for a micro cell the coverage area may have a diameter below a kilometer, and for a pico cell the coverage area may have a diameter below a 100m. A femto cell may be the smallest cell and it may be used to cover a household or gate section at the airport, i.e. its coverage area may have a diameter below 50m. Thus, a base station transceiver may also be referred to as cell.

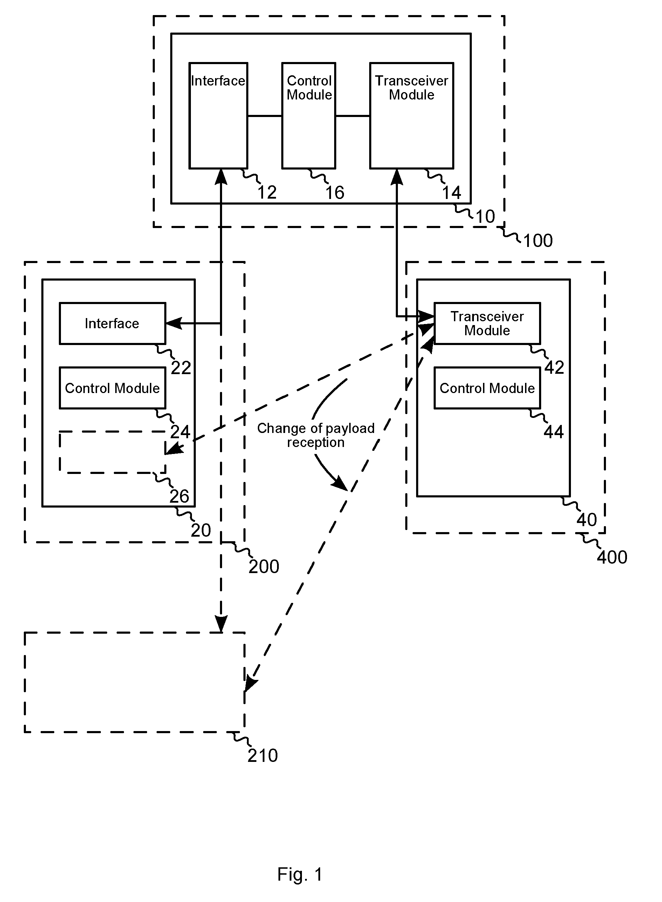

Fig. 1 illustrates an embodiment of an apparatus 10 for a first base station transceiver 100. In other words, the apparatus may be adapted to or operable in a base station transceiver 100; it may be operated by or comprised in a base station transceiver 100. Embodiments may also provide a base station transceiver 100 comprising the apparatus 10. For example, the apparatus 10 may correspond to a macro cell base station transceiver apparatus. Fig. 1 further shows an embodiment (broken lines) of a first base station transceiver 100 comprising the apparatus 10. The apparatus 10 is operable to provide information related to changing payload data reception of a mobile transceiver 400 from a second base station transceiver 200 to a third base station transceiver 210. The mobile transceiver 400 receives data from the first base station transceiver 200. The intended payload reception change is illustrated by according arrows in Fig. 1.

The apparatus 10 comprises an interface 12 operable to communicate with the second and third base station transceivers 200, 210. In some embodiments, an interface of an entity may correspond to any interface adapted to the respective communication or access technology. Interfaces may use the same or different access technologies, protocols, media, etc. As an example, in an embodiment of an LTE network the interface 12 may correspond to an X2-interface.

The apparatus 10 further comprises a transceiver module 14 operable to communicate with the mobile transceiver 400. In the following, a transceiver module may correspond to one or more transceiver devices, one or more transceiver units, or any means for transmitting or receiving. A transceiver module may therefore comprise typical transmitter or receiver components, such as one or more antennas, filter or filter circuitry, an amplifier such as a Low Noise Amplifier (LNA) or a Power Amplifier (PA), conversion circuitry for converting a Radio Frequency (RF) signal into a base band signal or vice versa, an analog/digital or digital/analog converter, or signal processing capability such as a Digital Signal Processor (DSP).

The apparatus further comprises a control module 16, which is operable to control the interface 12 and the transceiver module 14. The control module 16 is coupled to the interface 12 and the transceiver module 14. A control module may correspond to one or more control units, one or more control devices, or any means for controlling. In some embodiments a control module may be implemented in software, which is executable on accordingly adapted hardware, such as a processor, a Digital Signal Processor (DSP), a multi-purpose processor, or the like.

In the embodiment illustrated in Fig. 1 the control module 16 is operable to receive information related to a signal measurement from the mobile transceiver 400 using the transceiver module 14. The information related to the signal measurement indicates that the mobile transceiver 400 is capable of receiving payload data from the third base station transceiver 210. The control module 16 is further operable to provide information related to payload data forwarding to the second base station transceiver 200 using the interface 12. The information related to payload data forwarding indicates to forward payload data for the mobile transceiver 400 to the third base station transceiver 210. The control module is further operable to provide information related to a mobile reconfiguration to the mobile transceiver 400 using the transceiver module 14. The information related to the mobile reconfiguration indicates to receive data from the third base station transceiver 210.

Fig. 1 further illustrates an embodiment of an apparatus 20 for the second base station transceiver 200. In other words, the apparatus 20 may be adapted to or operable in a base station transceiver 200, 210; it may be operated by or comprised in a base station transceiver 200, 210. Embodiments may also provide a base station transceiver 200, 210 comprising the apparatus 20. Fig. 1 further shows embodiments (broken lines) of base station transceivers 200, 210 comprising the apparatus 20. For example, the second and third base station transceivers 200, 210 may correspond to small cell base station transceivers. The apparatus 20 is operable to receive information related to changing payload data reception of a mobile transceiver 400 from a first base station transceiver 100. The information related to changing payload data reception indicates a change of payload data reception of the mobile transceiver 400 from the second base station transceiver 200 to the third base station transceiver 210.

The apparatus 20 comprises an interface 22, which is operable to communicate with the first base station transceiver 100 and the third base station transceiver 210. The apparatus 20 further comprises a control module 24, which is operable to control the interface 22 and which is coupled to the interface 22. The control module 24 is further operable to receive information related to payload data forwarding to the third base station transceiver 210 using the interface 22. The information related to payload data forwarding indicates to forward payload data for the mobile transceiver 400 to the third base station transceiver 210. The control module 24 is further operable to forward the payload data for the mobile transceiver 400 to the third base station transceiver 210. With respect to interface 22 and control module 24 implementations it is referred to the above respective description of such components.

In some embodiments the apparatus 20 may comprise a transceiver module 26, which is operable to communicate with the mobile transceiver 400. The control module 24 may be operable to forward the received data to the mobile transceiver 400 or another mobile transceiver using the transceiver module 26.

Fig. 1 further illustrates an embodiment of an apparatus 40 for a mobile transceiver 400. In other words, the apparatus 40 may be adapted to or operable in a mobile transceiver 400; it may be operated by or comprised in a mobile transceiver 400. Embodiments may also provide a mobile transceiver 400 comprising the apparatus 40. Fig. 1 further shows an embodiment (broken lines) of a mobile transceiver 400 comprising the apparatus 40. The mobile transceiver 400 receives payload data from the second base station transceiver 200. The apparatus 40 comprises a transceiver module 42, which is operable to communicate with the second base station transceiver 200. The apparatus 40 further comprises a control module 44, which is operable to control the transceiver module 42 and which is coupled to the transceiver module 42. The control module 44 may be further operable to control the reception of the payload data from the second base station transceiver 200. The control module 44 is further operable to receive information related to changing payload data reception from the first base station transceiver 100. The information related to changing payload data reception indicates to change payload data reception from the second base station transceiver 200 to the third base station transceiver 210. The control module 44 is further operable to configure payload data reception from the third base station transceiver 210 while receiving payload data from the second base station transceiver 200. The control module 44 is further operable to provide information relating to an acknowledgment of a configured payload data reception from the third base station transceiver 210 to at least one of the first, second or third base station transceiver 100, 200, 210. With respect to transceiver module 42 and control module 44 implementations it is referred to the above respective description of such components.

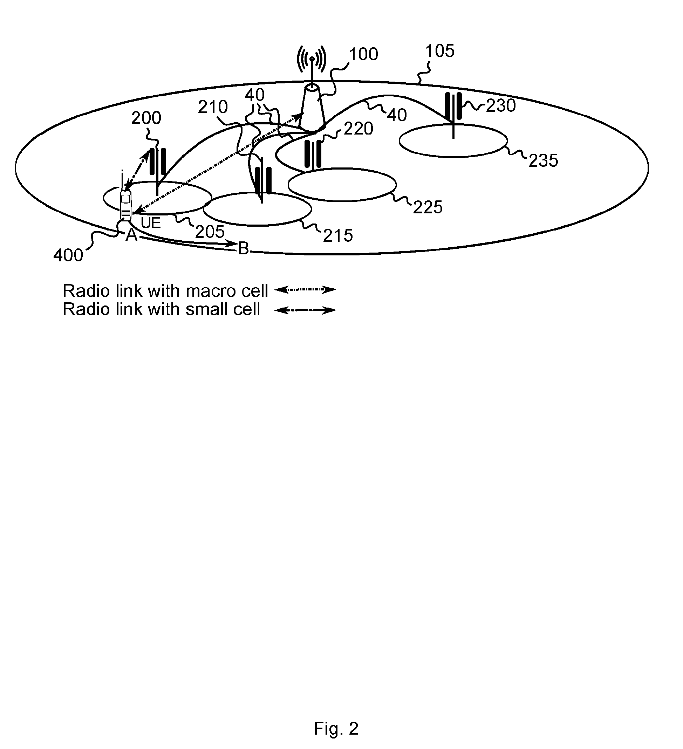

In the embodiment illustrated in Fig. 1 the mobile transceiver 400 changes its payload data reception from the second base station transceiver 200 to the third base station transceiver 210, as it is indicated be the corresponding arrows. In the following embodiments will be described in which the first base station transceiver 100 corresponds to a macro cell base station transceiver or macro eNB, in which the second base station transceiver 200 corresponds to a first small cell base station transceiver or a first small cell eNB, and in which the third base station transceiver 210 corresponds to a second small cell base station transceiver or a second small cell eNB. In other embodiments the base station transceivers 100, 200, 210 may generate cells of different sizes, e.g. they may generate cells of the same size. In the following embodiment the eNBs form at least part of an LTE or an LTE-A network. The mobile transceiver 400 corresponds to an according LTE or LTE-A UE. Fig. 2 illustrates such an example scenario.

In Fig. 2 the first base station transceiver 100 generates a macro cell 105, in which there are multiple small cell base station transceivers 200, 210, 220, and 230. The small cell base station transceiver 200 corresponds to the above second base station transceiver 200 and the small cell base station transceiver 210 corresponds to the above third base station transceiver 210. In the embodiment of Fig. 2 macro eNB 100 corresponds to a master eNB to which the small cell eNBs are coupled via backhaul links 240. As illustrated in Fig. 2 the small cell eNBs generate coverage areas 205, 215, 225, and 235, which lie in the coverage area 105 of the macro eNB 100. In further embodiments the macro cell base station transceiver 100 may comprise a coverage area 105, which at least partly surrounds coverage areas 205, 215 of the first and second small cell base station transceivers 200, 210. The first small cell base station transceiver 200 and the second small cell base station transceiver 210 may comprise coverage areas 205, 215, which are at least partly surrounded by the coverage area 105 of the macro cell 100. Fig. 2 further illustrates a UE 400, which is assumed to move from location A to location B, and which has a payload connection or a radio link to the first small cell eNB 200. It is further assumed that the UE 400 has another radio link to the macro eNB 100, e.g. for purposes of control signaling.

Some embodiments may provide a more efficient cell change procedure as during a small cell change reconfiguration of an offloaded traffic bearer to a macro cell, such that a UE is being served by the macro cell prior to the small cell change, may be prevented. In embodiments the second small cell 210 may be configured for dual connectivity and the offloading bearers may be configured for the second small cell 210. Embodiments may prevent a 2-step small cell change procedure. In embodiments the macro cell 100 may not need to allocate resources for the offloaded traffic during the small cell change. The macro eNB 100 may not need to cater for the small cell change, hence macro cell resources may be used more efficiently in embodiments. Embodiments may enable are shorter interruption in the payload data transfer with the UE 400. When a bearer is modified such that it is served by a different eNB, the data interruption due to the non-ideal backhaul link may be considered and reduced by embodiments. This may be achieved having parallel data transmission, configuration of the new traffic bearer and data forwarding from the originating base station to the target base station as will be detailed subsequently. If a 2-step small cell change procedure was applied for the bearer change, data interruption may occur for both bearer changes from the first small cell 200 to the macro cell 100 and macro cell 100 to the second small cell 210. Embodiments may take into account that the backhaul delay, especially in a scenario involving small cells as shown in Fig. 2, may exceed the delay on the air interface. Embodiments may provide a more efficient signaling as in a 2-step bearer configuration an increased signaling may be used as 2 sets of bearer configuration parameters may be provided to a UE.

Embodiments may enable a small cell change from the first small cell 200 to the second small cell 210 in a single configuration message. Embodiments may provide a logical interface between the first small cell 200 and the second small cell 210, which may enable exchange of signaling related to the small cell change and possible data forwarding. Fig. 2 depicts a typical dense small cell deployment scenario. The UE 400 moves from point A to point B and a small cell change occurs from small cell 200 to small cell 210.

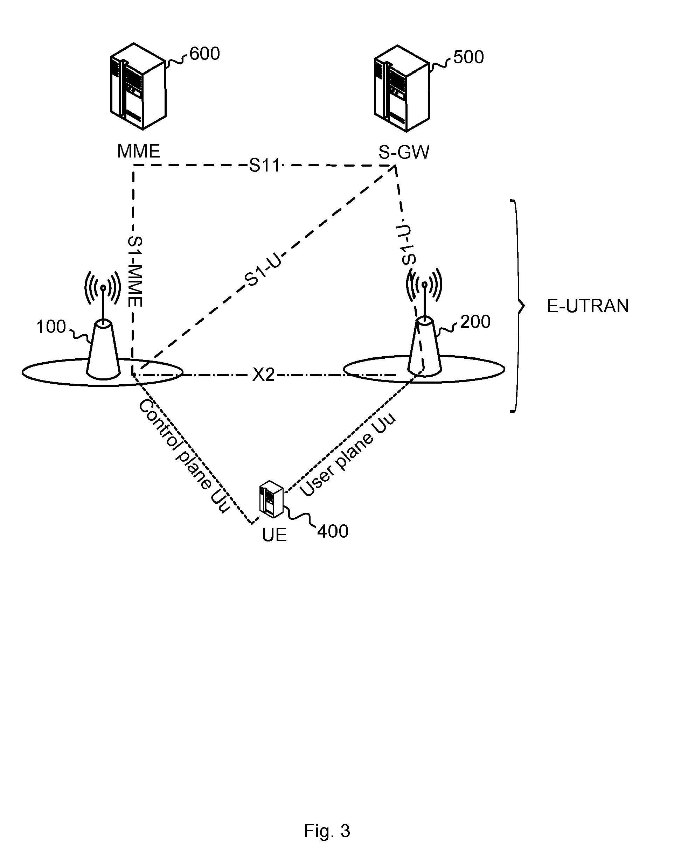

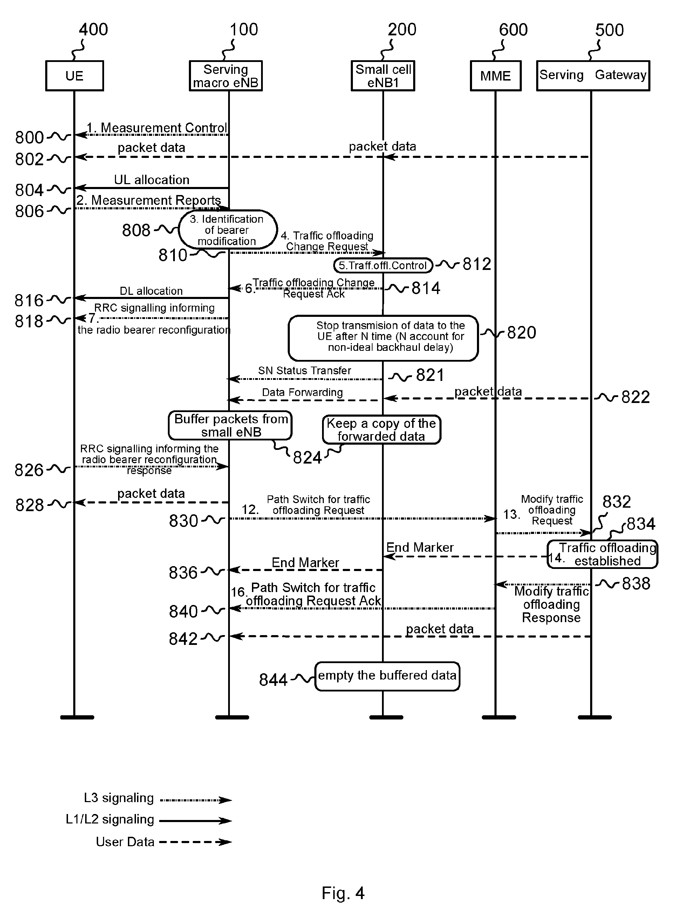

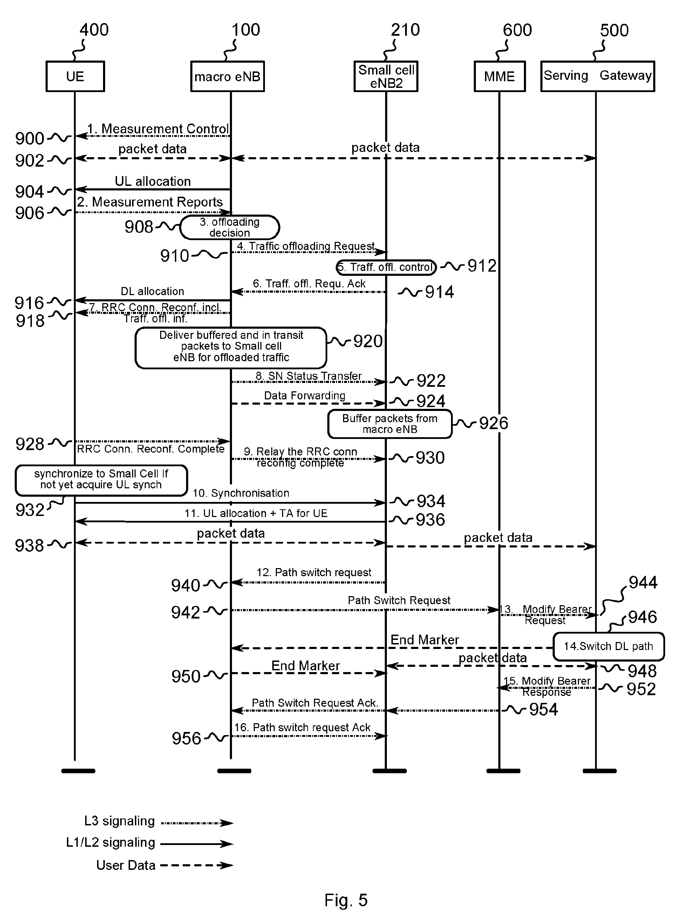

Fig. 3 depicts a user plane traffic bearer split from a Serving GateWay (S-GW) 500 to a macro cell 100 and a small cell 200 in an embodiment in an E-UTRAN. Fig. 3 shows a macro eNB 100, a small cell eNB 200, a UE 400, a S-GW 500, and a Mobility Management Entity (MME) 600. In this embodiment a user plane architecture option is to have bearer split at the S-GW, as illustrated by the two S1-U connections, one between the S-GW 500 and the macro eNB 100 and another between the S-GW 500 and the small cell eNB 200. An S1-MME interface terminates at the macro eNB 100 while S1-U terminates at the macro and the small cell 100, 200. The S1-U offloaded bearers of the UE 400 terminate at the small cell 200. Basically there are at least two control plane architectures conceivable in embodiments. One is to have single Radio Resource Control (RRC) entity for the UE 400 located at the macro eNB 100. This is illustrated in Fig. 2 by the control plane Uu link between the UE 400 and the macro eNB 100. In other embodiments there may be two RRC entities directly communicating to the UE 400 located at the macro and small cell eNBs 100, 200. With the single RRC entity option, the signaling for small cell change according to a 2-step procedure is illustrated in Figs. 4 and 5.

Fig. 4 illustrates a message sequence chart of a downlink traffic bearer change from a first small cell eNB 200 to a macro cell eNB 100. Fig. 5 illustrates a message sequence chart of a downlink traffic bearer change from a macro cell eNB 100 to a second small cell eNB 210. Fig. 4 depicts from left to right the UE 400, a serving macro eNB 100, a first small cell eNB 200, an MME 600, and an S-GW 500. The reconfiguring the offloaded bearers to be served by the macro eNB 100 is shown in Fig. 4 and reconfiguring the offloaded bearers to be served by the second small cell eNB 210 is shown in Fig. 5. In the Figs. downlink bearers are considered.

Fig. 4 shows, in act 800, that the macro eNB 100 has measurement control over the UE 400. The UE 400 receives payload data from the first small cell eNB 200 as indicated by act 802, which receives the payload data from the S-GW 500. The serving macro eNB 100 allocates an uplink bearer configuration to the UE 400 in act 804 and receives measurement reports from the UE 400 in act 806. The macro eNB 100 can then identify or decide on a bearer modification based on the measurement results in act 808. The macro eNB 100 then sends a traffic offloading change request to the first small cell eNB 200 in act 810. A traffic offloading control at the first small cell eNB 200 may then evaluate the offloading request in act 812 and return with an according acknowledgment to the macro eNB 100 in act 814.

The macro eNB 100 provides a downlink allocation configuration to the UE 400 and uses RRC signaling to inform a radio bearer reconfiguration to the UE 400 (act 818). In act 820, the first small cell eNB 200 stops transmission of data to the UE 400 after a certain time, here after having transmitted N payload data packets to the UE 400 to account for non-ideal backhaul delay. The first small cell eNB 200 then forwards a Sequence Number (SN) status of the payload data transmission and the payload data received from the S-GW 500 to the macro eNB 100 (acts 821, 822). The macro eNB 100 may buffer the data packets from the first small cell eNB 200 and the first small cell eNB 200 may keep a copy of the forwarded data as indicated by act 824. The UE 400 uses RRC signaling to inform the macro eNB 100 on the radio bearer reconfiguration response, e.g. by an according complete message, as shown by act 826. In line with act 828 the UE 400 may receive the payload data from the macro eNB 100.

The macro eNB 100 sends a path switch for traffic offloading request to the MME 600 (act 830). The MME 600 sends a modify traffic offloading request to the S-GW 500 (act 832). The S-GW 500 provides an end marker to the first small cell eNB 200 after traffic offloading is established (act 834). The end marker is forwarded from the first small cell eNB 200 to the serving macro eNB 100 (act 836). The S-GW 500 provides a modify traffic offloading response to the MME 600 (act 838). The MME 600 provides a path switch for traffic offloading request acknowledgment to the macro eNB 100 (act 840). The S-GW 500 provides the payload data to the macro eNB 100 (act 842). The first small cell base station transceiver 200 empties the buffered data (act 844).

Fig. 5 depicts from left to right the UE 400, a serving macro eNB 100, a second small eNB 210, an MME 600, and a S-GW 500. Fig. 5 shows in act 900 that the macro eNB 100 has measurement control over the UE 400. The UE 400 receives payload data from the macro cell eNB 100, which receives the payload data from the S-GW 500, act 902. The serving macro eNB 100 allocates an uplink bearer configuration to the UE 400 in act 904 and receives measurement reports from the UE 400 in act 906. The macro eNB 100 can then identify or decide on a bearer modification based on the measurement results in act 908. The macro eNB 100 then sends a traffic offloading change request to the second small cell eNB 210 (act 910). A traffic offloading control at the second small cell eNB 210 may then evaluate the offloading request in act 912 and return with an according acknowledgment to the macro eNB 100 in act 914.

The macro eNB 100 provides a downlink allocation configuration to the UE 400 and uses RRC signaling to inform a radio bearer reconfiguration to the UE 400 in acts 916 and 918. The macro cell eNB 100 delivers buffered and in transit data packets to the second small cell eNB 210 for offloading traffic (act 920). The macro eNB 100 further provides information on a sequence number to the second small cell eNB 210 to enable continuous data transmission (act 922) and forwards the payload data packets to the second small cell eNB 210 (act 924). The second small cell eNB 210 buffers the data packets from the macro eNB 210 (926). The UE 400 uses RRC signaling to inform the macro eNB 100 on the radio bearer reconfiguration response, e.g. by an according complete message, as shown in act 928. In line with act 930 the macro eNB 100 relays the reconfiguration complete message to the second small cell base station transceiver 210. The UE 400 may synchronize to the second small cell eNB 210 if uplink synchronization has not already been acquired (act 932). Synchronization may then be achieved (act 934) and the second small cell eNB 210 may provide uplink allocation information and timing advance configuration to the UE 400 (act 936). The UE 400 receives payload data from the second small cell eNB (act 938).

The second small cell eNB 210 sends a path switch for traffic offloading request to the macro eNB 100 (act 940), which forward the path switch request to the MME 600 (act 942). The MME 600 send a modify bearer request to the S-GW 500 (act 944). The S-GW 500 provides an end marker to the macro cell eNB 210 and switches the downlink path (act 946). Payload data is exchanged (uplink and downlink) between the second small cell eNB 210 and the S-GW 500 (act 948). The end marker is forwarded from the macro cell eNB 200 to the second small cell eNB 210 (act 950). The S-GW 500 provides a modify bearer response to the MME 600 (act 952). The MME 600 provides a path switch request acknowledgment to the macro eNB 100 and the second small cell eNB 210 (act 954). The macro eNB 100 provides a path switch request acknowledgement to the second small cell eNB 210 (act 956).

As illustrated by Figs. 4 and 5 after the small cell change decision is made at the macro eNB 100, the macro eNB 100 communicates to both, the first small cell eNB 200 and the second small cell eNB 210, transmitting a "traffic offloading change request" message. There are two RRC connection reconfiguration signaling procedures to the UE for enabling the data delivery over macro eNB 100 and for enabling data delivery over the second small cell eNB 210. The data forwarding may use two links. First, data delivery is carried out from the first small cell eNB 200 to the macro eNB 100, and secondly data delivery is carried out from macro eNB 100 to the second small cell eNB 210. Two sets of path switch request negotiations between the macro eNB 100 and the S-GW 500 and between the second small cell eNB 210 and the S-GW 500 may be carried out.

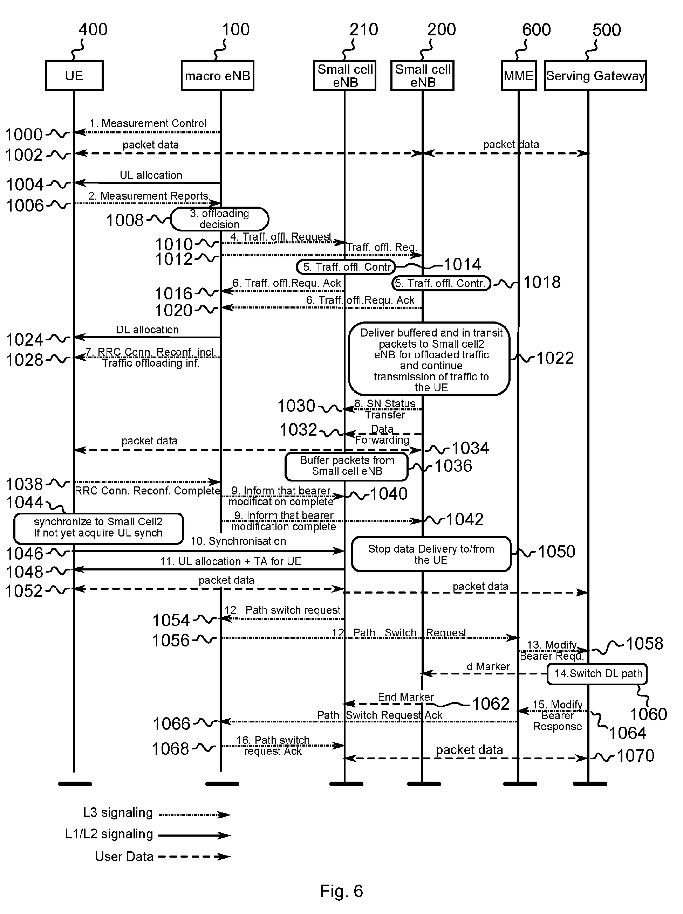

Fig. 6 illustrates a message sequence chart of a traffic bearer change from a first small cell eNB 200 to a second small cell eNB 210 in an embodiment. Fig. 6 depicts from left to right the UE 400, a serving macro eNB 100, a second small eNB 210, a first small cell eNB 200, an MME 600, and a S-GW 500.

Fig. 6 shows in act 1000 that the macro eNB 100 has measurement control over the UE 400. The UE 400 receives payload data from the first small cell eNB 210, which receives the payload data from the S-GW 500, act 1002. The serving macro eNB 100 allocates an uplink bearer configuration to the UE 400 in act 1004 and receives measurement reports from the UE 400 in act 1006. In line with the embodiment described with the help of Fig. 1, the control module 16 of the macro eNB 100 is operable receive information related to a signal measurement from the mobile transceiver 400 using the transceiver module 14. The information related to the signal measurement indicates that the mobile transceiver 400 is capable of receiving payload data from the third base station transceiver 210, exemplified as the second small cell base station transceiver in the present embodiment. In embodiments such measurements may correspond to information relating to a Signal-to-Interference-and-Noise Ratio (SINR), a Signal-to-Noise Ratio (SNR), a Reference Signal Receive Power (RSRP), Receive Signal Strength Indicator (RSSI) etc., which are based on radio signals, e.g. reference signals, transmitted by the second small cell eNB 210 and measured at the UE 400. The macro eNB 100 identifies or decides on a bearer modification based on the measurement results in act 1008.

The control module 16 at the macro eNB 100 is the operable to provide information related to payload data forwarding to the second base station transceiver 200 and the third base station transceiver 210 using the interface 12. The information related to payload data forwarding indicates to forward payload data for the mobile transceiver 400 from the second base station transceiver 200 to the third base station transceiver 210. This information is exemplified as a traffic offloading request in Fig. 6. The macro eNB 100 then sends a traffic offloading change request to the first and the second small cell eNBs 200, 210 (acts 1010, 1012). A traffic offloading control at the second small cell eNB 210 may evaluate the offloading request in act 1014 and return with an according acknowledgment to the macro eNB 100 in act 1016. A traffic offloading control at the first small cell eNB 200 may evaluate the offloading request in act 1018 and return with an according acknowledgment to the macro eNB 100 in act 1020.

The macro eNB 100 provides a downlink allocation configuration to the UE 400 and uses RRC signaling to inform a radio bearer reconfiguration to the UE 400 in acts 1024 and 1028. This corresponds to the control module 16 at the macro eNB 100 providing information related to a mobile reconfiguration to the mobile transceiver 400 using the transceiver module 14. The information related to the mobile reconfiguration indicates to receive payload data from the third base station transceiver 210.

In the present embodiment the control module 16 is operable to receive information related to an acknowledgment of a reception of the information related to payload data forwarding from the second base station transceiver 200 (act 1020). The control module 16 is operable to receive information related to an acknowledgment of a reception of the information related to the change of payload data reception from the third base station transceiver 210 (act 1016). The control module 16 is operable to provide the information related to mobile reconfiguration to the mobile transceiver 400 (acts 1024 and 1028) after receiving the information related to the acknowledgments from the second and the third base station transceivers 200, 210 (acts 1016 and 1020).

Correspondingly, at the first small cell eNB 200 the control module 24 is operable receive information related to payload data forwarding to the third base station transceiver 210 using the interface 22 (act 1012). The information related to payload data forwarding indicates to forward payload data for the mobile transceiver 400 to the third base station transceiver 210. The control module 24 of the first small cell base station transceiver 200 is operable forward the payload data for the mobile transceiver 400 to the third base station transceiver 210 (acts 1022, 1032). The first small cell eNB 200 delivers buffered and in transit data packets to the second small cell base station transceiver 210 for offloading the traffic but continues transmitting the payload data to the UE 400 (acts 1032, and 1034). The control module 24 is operable to forward information related to a status of the payload data transmission to the mobile transceiver 400 to the third base station transceiver 210, which is exemplified by a Sequence Number (SN) status transfer in Fig. 6 (act 1030).

On the UE 400 side information related to changing payload data reception is received (act 1028). The information related to changing payload data reception indicates to change payload data reception from the second base station transceiver 200 to a third base station transceiver 210. The UE 400 configures payload data reception from the third base station transceiver 210 while receiving payload data from the second base station transceiver 200 (acts 1028 and 1034). The UE 400 provides information relating to an acknowledgment of a configured payload data reception from the third base station transceiver 210 to the first, second or third base station transceiver 100; 200; 210. This is exemplified in Fig. 6 by act 1038, in which the UE 400 sends an RRC connection reconfiguration complete message to the macro eNB 100. In the present embodiment the control module 44 at the UE 400 is operable to provide the information relating to the acknowledgement while receiving payload data from the second base station transceiver 200 (act 1038).

At the second small cell base station transceiver 210 the forwarded payload data is buffered (act 1036). At the second small cell eNB 210 the control module 24 is operable to receive information related to changing payload data reception of the mobile transceiver 400 from the first base station transceiver 100 using the interface 22 (act 1010). The information related to changing payload data reception further indicates to receive payload data for forwarding to the mobile transceiver 400 from the first small cell eNB 200. The control module 24 is operable to receive payload data from the first small cell eNB 200 using the interface 22. The control module 24 is operable to provide information related to an acknowledgment of a reception of the further information related to changing payload data reception to the macro eNB 100 (act 1016). The control module 24 is operable to receive information related to a status of the payload data transmission to the other mobile transceiver 400 from the first small cell eNB 200 (act 1030).

It is to be noted that the present embodiment describes the features of the respective base station transceivers for the change in payload reception of UE 400 from the first to the second small cell eNB 200, 210. In embodiments both base station transceiver apparatuses may be operable for changes in both directions. In some embodiments at the second base station transceiver apparatus 20 the control module 24 may be operable to receive further information related to changing payload data reception of another mobile transceiver from the first base station transceiver 100 using the interface 22. The further information related to changing payload data reception indicates that payload data reception of the other mobile transceiver is to be changed from the third base station transceiver 210 to the second base station transceiver 200. The further information related to changing payload data reception further indicates to receive payload data for forwarding to the mobile transceiver 410 from the third base station transceiver 210. The control module 24 may be operable to receive payload data from the third base station transceiver 210 using the interface 22. The control module 24 may be operable to provide information related to an acknowledgment of a reception of the further information related to changing payload data reception to the first base station transceiver 100. In some embodiments the control module 24 may be operable to receive information related to a status of the payload data transmission to the other mobile transceiver from the third base station transceiver 210. The control module 24 may be operable to provide information related to path switch to a data gateway after receiving payload data for forwarding to the other mobile transceiver 410 from the third base station transceiver 210. The information related to the path switch may comprise an indication for the data gateway to forward payload data for the other mobile transceiver 410 to the second base station transceiver 200 and to terminate forwarding of payload data for the other mobile transceiver 410 to the third base station transceiver 210.

Coming back to the embodiment of Fig. 6 the macro eNB 100 forwards the complete message of the UE 400 the first and second small cell eNBs 200, 210 (acts 1040 and 1042). The UE 400 may synchronize to the second small cell eNB 210 if uplink synchronization has not already been acquired (act 1044). Synchronization may then be achieved (act 1046) and the second small cell eNB 210 may provide uplink allocation information and timing advance configuration to the UE 400 (act 1048). The first small cell eNB stops data delivery to/from the UE 400 (act 1050). The UE 400 receives payload data from the second small cell eNB (act 1052). In the uplink the second small cell eNB 210 may forward the data to the S-GW 500, however, in the downlink data is still received from the first small cell eNB 200. The second small cell base station transceiver 210 may then request a path switch to the macro eNB 100 (act 1054), which forwards the request to the MME 600 (act 1056).

Hence, the control module 24 at the second small cell eNB 210 is operable to provide information related to path switch to a data gateway after receiving payload data for forwarding to the mobile transceiver 400 from the first small cell eNB 200. The information related to the path switch comprises an indication for the data gateway 500 to forward payload data for the mobile transceiver 400 to the second small cell eNB 210 and to terminate forwarding of payload data for the mobile transceiver 400 to the first small cell eNB 200. Furthermore, in the present embodiment the control module 24 is operable to provide the information related to path switch to the data gateway 500 via the first base station transceiver 100.

Correspondingly from the perspective of the first small cell eNB 200, when a payload reception change is carried out in the other direction for another mobile transceiver, the control module 24 may be is operable to provide information related to path switch to a data gateway 500 after receiving payload data for forwarding to another mobile transceiver from the second small cell base station transceiver 210. The information related to the path switch comprises an indication for the data gateway to forward payload data for the other mobile transceiver to the first small cell eNB 200 and to terminate forwarding of payload data for the other mobile transceiver to the second small cell eNB 210.

From the perspective of the macro cell eNB 100 the payload data for transmission from the second and the third base station transceivers 200, 210 to the mobile transceiver 400 is provided by the data gateway 500. The control module 16 may be operable to provide information related to a path switch to the data gateway using the interface 12 after providing the information related to the mobile reconfiguration, the information related to the path switch indicating to forward payload data for transmission to the mobile transceiver 400 to the third base station transceiver 210, i.e. the second small cell eNB 210.

In line with Fig. 6 the MME 600 may forward the modify bearer request to the S-GW 500 (act 1058), which may switch the downlink path by sending a termination marker to the first small cell eNB 200 (act 1060). The first small cell eNB 200 sends a corresponding end marker to the second small cell 210 (act 1062). The MME 600 acknowledges the path switch request to the macro eNB 100 (act 1066), which in turn acknowledges the path switch to the second small cell eNB 210 (act 1068). The payload data is then provided from the S-GW 500 to the second small cell eNB 210 without relaying at the first small cell eNB 200 (act 1070).

Accordingly the control module 24 at the second small cell eNB 200 is further operable to receive an indication from the data gateway 500 on a termination of the payload data forwarding from the data gateway 500 to the first small cell eNB 200 (act 1060). The control module 24 is further operable to forward information related to the indication to the second small cell eNB 210.

Fig. 6 illustrates a small cell change procedure in an embodiment. It is to be noted that the features described for the base station transceivers (macro, first and second small cell transceivers) may be present in each of these entities. Features described for the first base station transceiver 100 may as well be present in the second or third base station transceivers 200, 210. Features described for the second base station transceiver 200 may as well be present in the first or third base station transceivers 100, 210. Features described for the third base station transceiver 210 may as well be present in the first or second base station transceivers 100, 200.

In the embodiment illustrated in Fig. 6 the offloaded traffic over the first small cell 200 is reconfigured to be served by the second small cell 210. The macro eNB 100 is in charge of making the decision to modify the offloaded bearers. The macro eNB 100 sends a traffic offloading request to the second small cell eNB 210. The signaling may include the Evolved Packet System (EPS) bearer information for the offloaded bearers, UE context, Radio Bearer (RB) configuration at the first small cell eNB 200 and also a first small cell eNB 200 cell Identification and information necessary to establish a data forwarding and control signaling tunnel between the first small cell eNB 200 and the second small cell eNB 210. Similarly, the macro eNB may send a traffic offloading request to the first small cell eNB 200 together with the information necessary establish a tunnel for data forwarding and control signaling between the first small cell eNB 200 and the second small cell eNB 210. After a receiving the traffic offloading request, the first small cell eNB 200 sends an acknowledge message back to the macro eNB 100 and it establishes a tunnel between the first small cell eNB 200 and the second small cell eNB 210. The first small cell eNB 200 continues the data communication to the UE 400. Upon establishment of the tunnel between the first small cell eNB 200 and the second small cell eNB 210, the first small cell eNB 200 starts data forwarding and the SN status transfer to the second small cell eNB 210.

Upon reception of traffic offloading requests acknowledgement messages from both small cell eNBs 200 and 210, the macro eNB 100 transmits the modified bearer information to the UE 400 possibly in an RRC connection reconfiguration message. Upon reception of the RRC connection reconfiguration message with the modified bearer information, the UE 400 may stop receiving and transmitting of the data for the modified bearers to/from the first small cell eNB 200. An RRC connection reconfiguration complete message is sent to the macro eNB 100. The macro eNB 100 forwards the information of the bearer modification complete message to the first and second small cell eNBs 200, 210.

If the UE 400 has not yet synchronized to the second small cell eNB 210, the UE 400 performs the uplink synchronization procedure. Note that in another embodiment, the RRC connection reconfiguration complete message is sent by the UE 400 to the macro eNB 100 after successful uplink synchronization to the second small cell eNB 210. Similarly in another embodiment, the UE 400 may suspend the communication to the first small cell eNB 200 with the old radio configuration after successful uplink synchronization to the second small cell eNB 210. In some embodiments the UE 400 may carry out duplicate detection on the data packets received from the second small cell eNB 210 to synchronize the packet sequence after the traffic bearer change.

As the first small cell eNB 200 may communicate with the UE 400 until it is ready to apply the modified radio configuration, the data interruption may be minimized or reduced by embodiments. Moreover the UE 400 may only receive one RRC connection reconfiguration message and one RRC connection reconfiguration complete message and the over the air signaling load may be reduced by embodiments.

Upon the reception of the bearer modification complete message from the macro eNB 100, the second small cell eNB 210 may initiate the path switch requests towards the MME 600 via the macro cell eNB 100. The macro cell eNB 100 may generate the path switch message to the MME 600 based on the information provided by the first small cell eNB 200 and the second small cell eNB 210. The path switch message may convey the second small cell eNB 210 identification, whether the modified path is established, and also the first small cell eNB 200 where the end marker is to be provided. Upon completion of the path switch, S-GW 500 forwards the data to the second small cell eNB 210 and the second small cell eNB 210 transmits payload data to the UE 400.

Embodiments may hence enable an efficient traffic bearer switching with reduced signaling overhead and reduce interruption in data transmission.

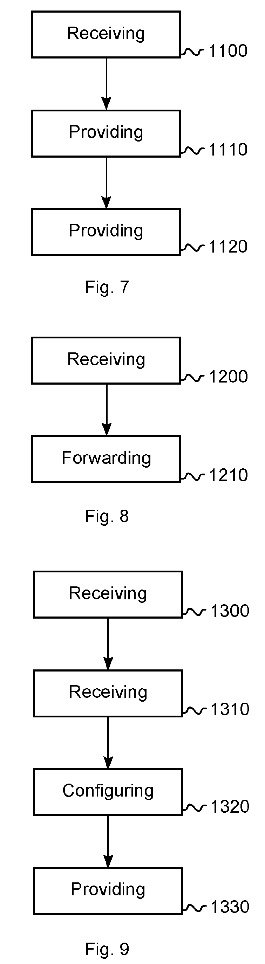

Fig. 7 illustrates a block diagram of a flow chart of an embodiment of a method for the first base station transceiver. The method for the first base station transceiver 100 is operable to provide information related to changing payload data reception of the mobile transceiver 400 from the second base station transceiver 200 to the third base station transceiver 210 to the mobile transceiver 400. The method comprises receiving 1100 information related to a signal measurement from the mobile transceiver 400. The information related to the signal measurement indicates that the mobile transceiver 400 is capable of receiving payload data from the third base station transceiver 210. The method comprises providing 1110 information related to payload data forwarding to the second base station transceiver 200. The information related to payload data forwarding indicates to forward payload data for the mobile transceiver 400 to the third base station transceiver 210. The method further comprises providing 1120 information related to a mobile reconfiguration to the mobile transceiver 400. The information related to the mobile reconfiguration indicates to receive payload data from the third base station transceiver 210.

Fig. 8 illustrates a block diagram of a flow chart of an embodiment of a method for the second base station transceiver 200, which is operable to receive information related to changing payload data reception of the mobile transceiver 400 from the first base station transceiver 100. The information related to changing payload data reception indicates a change of payload data reception of the mobile transceiver 400 from the second base station transceiver 200 to the third base station transceiver 210. The method comprises receiving 1200 information related to payload data forwarding to the third base station transceiver 210. The information related to payload data forwarding indicates to forward payload data for the mobile transceiver 400 to the third base station transceiver 210. The method further comprises forwarding 1210 the payload data for the mobile transceiver 400 to the third base station transceiver 210.

Fig. 9 illustrates a block diagram of a flow chart of an embodiment of a method for the mobile transceiver, which receives payload data from the second base station transceiver 200. The method comprises receiving 1300 the payload data from the second base station transceiver 200 and receiving 1310 information related to changing payload data reception from the first base station transceiver 100. The information related to changing payload data reception indicates to change payload data reception from the second base station transceiver 200 to the third base station transceiver 210. The method further comprises configuring 1320 payload data reception from the third base station transceiver 210 while receiving payload data from the second base station transceiver 200. The method further comprises providing 1330 information relating to an acknowledgment of a configured payload data reception from the third base station transceiver 210 to at least one of the first, the second or the third base station transceiver 100; 200; 210.

A further embodiment is a computer readable storage medium storing instructions which, when executed by a computer, cause the computer to implement one of the methods described herein. Other embodiments are a computer program or a computer program product having a program code for performing anyone of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", etc., may be provided through the use of dedicated hardware, such as "a controller", "a transmitter", "a receiver", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. An apparatus (10) for a first base station transceiver (100), the apparatus (10) being operable to provide information related to changing payload data reception of a mobile transceiver (400) from a second base station transceiver (200) to a third base station transceiver (210), the apparatus (10) comprising
an interface (12) operable to communicate with the second and the third base station transceivers (200; 210);
a transceiver module (14) operable to communicate with the mobile transceiver (400); and
a control module (16) operable to:
control the interface (12) and the transceiver module (14),
receive information related to a signal measurement from the mobile transceiver (400) using the transceiver module (14), the information related to the signal measurement indicating that the mobile transceiver (400) is capable of receiving payload data from the third base station transceiver (210),
provide information related to payload data forwarding to the second base station transceiver (200) using the interface (12), the information related to payload data forwarding indicating to forward payload data for the mobile transceiver (400) to the third base station transceiver (210), and
provide information related to a mobile reconfiguration to the mobile transceiver (400) using the transceiver module (14), the information related to the mobile reconfiguration indicating to receive payload data from the third base station transceiver (210),
wherein the payload data for transmission from the second and the third base station transceivers (200; 210) to the mobile transceiver (400) is provided by a data gateway, and wherein the control module (16) is operable to receive information related to a path switch from the third base station transceiver (210) and to provide information related to the path switch to the data gateway using the interface (12) after providing the information related to the mobile reconfiguration, the information related to the path switch indicating to forward payload data for transmission to the mobile transceiver (400) to the third base station transceiver (210).

2. The apparatus (10) of claim 1, wherein the control module (16) is further operable to provide information related to the change of payload data reception of the mobile transceiver (400) to the third base station transceiver (210) using the interface (12), the information related to the change of payload data reception indicating to receive payload data for forwarding to the mobile transceiver (400) from the second base station transceiver (200).

3. The apparatus (10) of claim 2, wherein the control module (16) is operable to receive information related to an acknowledgment of a reception of the information related to payload data forwarding from the second base station transceiver (200), and wherein the control module (16) is operable to receive information related to an acknowledgment of a reception of the information related to the change of payload data reception from the third base station transceiver (210), and wherein the control module (16) is operable to provide the information related to mobile reconfiguration to the mobile transceiver (400) after receiving the information related to the acknowledgments from the second and the third base station transceivers (200; 210).

4. An apparatus (20) for a second base station transceiver (200), the apparatus (20) being operable to receive information related to changing payload data reception of a mobile transceiver (400) from a first base station transceiver (100), the information related to changing payload data reception indicating a change of payload data reception of the mobile transceiver (400) from the second base station transceiver (200) to a third base station transceiver (210), the apparatus (20) comprising
an interface (22) operable to communicate with the first base station transceiver (100) and the third base station transceiver (210);
a control module (24) operable to:
control the interface (22),
receive information related to payload data forwarding to the third base station transceiver (210) using the interface (22), the information related to payload data forwarding indicating to forward payload data for the mobile transceiver (400) to the third base station transceiver (210), and
forward the payload data for the mobile transceiver (400) to the third base station transceiver (210),
wherein the control module (24) is operable to receive further information related to changing payload data reception of another mobile transceiver from the first base station transceiver (100) using the interface (22), the further information related to changing payload data reception indicating that payload data reception of the other mobile transceiver is to be changed from the third base station transceiver (210) to the second base station transceiver (200), the further information related to changing payload data reception further indicating to receive payload data for forwarding to the other mobile transceiver from the third base station transceiver (210),
wherein the control module (24) is operable to receive payload data from the third base station transceiver (210) using the interface (22),
wherein the control module (24) is operable to provide information related to path switch to a data gateway after receiving payload data for forwarding to the other mobile transceiver from the third base station transceiver (210), the information related to the path switch comprises an indication for the data gateway to forward payload data for the other mobile transceiver to the second base station transceiver (200) and to terminate forwarding of payload data for the other mobile transceiver to the third base station transceiver (210), and
wherein the control module (24) is operable to provide the information related to path switch to the data gateway via the first base station transceiver (100).

5. The apparatus (20) of claim 4, wherein the control module (24) is operable to forward information related to a status of the payload data transmission to the mobile transceiver (400) to the third base station transceiver (210), or wherein the control module (24) is operable to receive payload data for transmission to the mobile transceiver (400) from a data gateway, wherein the control module (24) is further operable to receive an indication from the data gateway on a termination of the payload data forwarding from the data gateway to the second base station transceiver (200), wherein the control module (24) is further operable to forward information related to the indication to the third base station transceiver (210), or wherein the control module (24) is operable to provide information related to an acknowledgment of a reception of the information related to payload data forwarding to the first base station transceiver (100).

6. The apparatus (20) of claim 4, wherein the control module (24) is operable to provide information related to an acknowledgment of a reception of the further information related to changing payload data reception to the first base station transceiver (100).

7. The apparatus (20) of claim 6, wherein the control module (24) is operable to receive information related to a status of the payload data transmission to the other mobile transceiver from the third base station transceiver (210).

8. A method for a first base station transceiver (100) being operable to provide information related to changing payload data reception of a mobile transceiver (400) from a second base station transceiver (200) to a third base station transceiver (210) to a mobile transceiver (400), the method comprising
receiving (1100) information related to a signal measurement from the mobile transceiver (400), the information related to the signal measurement indicating that the mobile transceiver (400) is capable of receiving payload data from the third base station transceiver (210);
providing (1110) information related to payload data forwarding to the second base station transceiver (200), the information related to payload data forwarding indicating to forward payload data for the mobile transceiver (400) to the third base station transceiver (210);
providing (1120) information related to a mobile reconfiguration to the mobile transceiver (400), the information related to the mobile reconfiguration indicating to receive payload data from the third base station transceiver (210);
receiving information related to a path switch from the third base station transceiver (210), wherein the payload data for transmission from the second and the third base station transceivers (200; 210) to the mobile transceiver (400) is provided by a data gateway;
providing information related to the path switch to the data gateway after providing the information related to the mobile reconfiguration, the information related to the path switch indicating to forward payload data for transmission to the mobile transceiver (400) to the third base station transceiver (210).

9. A method for a second base station transceiver (200) being operable to receive information related to changing payload data reception of a mobile transceiver (400) from a first base station transceiver (100), the information related to changing payload data reception indicating a change of payload data reception of the mobile transceiver (400) from the second base station transceiver (200) to a third base station transceiver (210), the method comprising
receiving (1200) information related to payload data forwarding to the third base station transceiver (210), the information related to payload data forwarding indicating to forward payload data for the mobile transceiver (400) to the third base station transceiver (210);
forwarding (1210) the payload data for the mobile transceiver (400) to the third base station transceiver (210);
receiving further information related to changing payload data reception of another mobile transceiver from the first base station transceiver (100), the further information related to changing payload data reception indicating that payload data reception of the other mobile transceiver is to be changed from the third base station transceiver (210) to the second base station transceiver (200), the further information related to changing payload data reception further indicating to receive payload data for forwarding to the other mobile transceiver from the third base station transceiver (210);
receiving payload data from the third base station transceiver (210);
providing information related to path switch to a data gateway via the first base station transceiver (100) after receiving payload data for forwarding to the other mobile transceiver from the third base station transceiver (210), the information related to the path switch comprises an indication for the data gateway to forward payload data for the other mobile transceiver to the second base station transceiver (200) and to terminate forwarding of payload data for the other mobile transceiver to the third base station transceiver (210).

10. A computer program having a program code for performing one of the methods of claims 8 or 9, when the computer program is executed on a computer or processor.

## Patentansprüche

1. Vorrichtung (10) für einen ersten Basisstationstransceiver (100), wobei die Vorrichtung (10) dafür ausgelegt ist, um Informationen zu einem sich verändernden Nutzdatenempfang eines mobilen Transceivers (400) von einem zweiten Basisstationstransceiver (200) an einen dritten Basisstationstransceiver (210) zur Verfügung zu stellen, wobei die Vorrichtung (10) umfasst:
eine Schnittstelle (12), die ausgelegt ist für die Kommunikation mit dem zweiten und dem dritten Basisstationstransceiver (200; 210);
ein Transceivermodul (14), das ausgelegt ist für das Kommunizieren mit dem mobilen Transceiver (400); und
ein Steuerungsmodul (16), das ausgelegt ist für:
das Steuern der Schnittstelle (12) und des Transceivermoduls (14),
den Empfang von Informationen zu einer Signalmessung von dem mobilen Transceiver (400) unter Verwendung des Transceivermoduls (14), wobei die Informationen zu der Signalmessung anzeigen, dass der mobile Transceiver (400) fähig ist, Nutzlastdaten von dem dritten Basisstationstransceiver (210) zu empfangen,
das Zurverfügungstellen von Informationen zur Nutzlastdatenweiterleitung an den zweiten Basisstationstransceiver (200) unter Verwendung der Schnittstelle (12), wobei die Informationen zur Nutzlastdatenweiterleitung anzeigen, dass Nutzlastdaten für den mobilen Transceiver (400) an den dritten Basisstationstransceiver (210) weiterzuleiten sind, und
das Zurverfügungstellen von Informationen zu einer mobilen Rekonfiguration für den mobilen Transceiver (400) unter Verwendung des Transceivermoduls (14), wobei die Informationen zu der mobilen Rekonfiguration anzeigen, dass Nutzlastdaten von dem dritten Basisstationstransceiver (210) zu empfangen sind,
wobei die vom zweiten und dritten Basisstationstransceiver (200; 210) an den mobilen Transceiver (400) zu übertragenden Nutzlastdaten von einem Datengateway zur Verfügung gestellt werden und wobei das Steuerungsmodul (16) dafür ausgelegt ist, um Informationen zu einer Pfadvermittlung vom dritten Basisstationstransceiver (210) zu empfangen und dem Datengateway Informationen zu der Pfadvermittlung zur Verfügung zu stellen, dazu die Schnittstelle (12) verwendend und nachdem die Informationen zu der mobilen Rekonfiguration sowie die Informationen zu der Pfadvermittlung zur Verfügung gestellt wurden, die anzeigen, dass Nutzlastdaten zur Übertragung an den mobilen Transceiver (400) an den dritten Basisstationstransceiver (210) weiterzuleiten sind.

2. Die Vorrichtung (10) nach Anspruch 1, wobei das Steuerungsmodul (16) weiterhin dafür ausgelegt ist, um dem dritten Basisstationstransceiver (210) unter Verwendung der Schnittstelle (12) Informationen zu der Veränderung des Nutzlastdatenempfangs des mobilen Transceivers (400) zur Verfügung zu stellen, wobei die Informationen zur Veränderung des Nutzlastdatenempfangs anzeigen, dass von dem zweiten Basisstationstransceiver (200) Nutzlastdaten zur Weiterleitung an den mobilen Transceiver (400) zu empfangen sind.

3. Die Vorrichtung (10) nach Anspruch 2, wobei das Steuerungsmodul (16) ausgelegt ist für das Empfangen von Informationen zu einer Bestätigung eines Empfangs der Informationen zur Nutzlastdatenweiterleitung vom zweiten Basisstationstransceiver (200), und wobei das Steuerungsmodul (16) ausgelegt ist für das Empfangen von Informationen zu einer Bestätigung eines Empfangs der Informationen zur Veränderung des Nutzlastdatenempfangs von dem dritten Basisstationstransceiver (210), und wobei das Steuerungsmodul (16) dafür ausgelegt ist, um die Informationen zur mobilen Rekonfiguration nach dem Empfang der Informationen zu den Bestätigungen von dem zweiten und dem dritten Basisstationstransceiver (200; 210) dem mobilen Transceiver (400) zur Verfügung zu stellen,

4. Vorrichtung (20) für einen zweiten Basisstationstransceiver (200), wobei die Vorrichtung (20) dafür ausgelegt ist, um von einem ersten Basisstationstransceiver (100) Informationen zur Veränderung des Nutzlastdatenempfangs des mobilen Transceivers (400) zu empfangen, wobei die Informationen zum sich verändernden Nutzdatenempfang eine Veränderung des Nutzdatenempfangs des mobilen Transceivers (400) vom zweiten Basisstationstransceiver (200) zu einem dritten Basisstationstransceiver (210) anzeigen, wobei die Vorrichtung (20) umfasst:
eine Schnittstelle (22), die ausgelegt ist für die Kommunikation mit dem ersten Basisstationstransceiver (100) und dem dritten Basisstationstransceiver (200; 210);
ein Steuerungsmodul (24), das ausgelegt ist für:
die Steuerung der Schnittstelle (22),
das Empfangen von Informationen zur Nutzlastdatenweiterleitung an den dritten Basisstationstransceiver (210) unter Verwendung der Schnittstelle (22), wobei die Informationen zur Nutzlastdatenweiterleitung anzeigen, dass Nutzlastdaten für den mobilen Transceiver (400) an den dritten Basisstationstransceiver (210) weiterzuleiten sind, und
das Weiterleiten der Nutzlastdaten für den mobilen Transceiver (400) an den dritten Basisstationstransceiver (210),
Wobei das Steuerungsmodul (24) dafür ausgelegt ist, um von dem ersten Basisstationstransceiver (100) unter Verwendung der Schnittstelle (22) weitere Informationen zu einem sich verändernden Nutzlastdatenempfang eines anderen mobilen Transceivers zu empfangen, wobei die weiteren Informationen zum sich verändernden Nutzlastdatenempfang anzeigen, dass der Nutzlastdatenempfang des anderen mobilen Transceivers vom dritten Basisstationstransceiver (210) auf den zweiten Basisstationstransceiver (200) zu verändern ist, wobei die weiteren Informationen zum sich verändernden Nutzlastdatenempfang weiterhin anzeigen, dass Nutzlastdaten vom dritten Basisstationstransceiver (210) zur Weiterleitung an den anderen mobilen Transceiver zu empfangen sind.
wobei das Steuerungsmodul (24) ausgelegt ist für den Empfang von Nutzlastdaten von dem dritten Basisstationstransceiver (210) unter Verwendung der Schnittstelle (22),
wobei das Steuerungsmodul (24) dafür ausgelegt ist, um nach dem Empfang von Nutzlastdaten von dem dritten Basisstationstransceiver (210) zur Weiterleitung an den anderen mobilen Transceiver Informationen zur Pfadvermittlung zu einem Datengateway zur Verfügung zu stellen, wobei die Informationen zur Pfadvermittlung eine Angabe umfassen, die das Datengateway auffordert, Nutzlastdaten für den anderen mobilen Transceiver an den zweiten Basisstationstransceiver (200) weiterzuleiten und die Nutzlastdatenweiterleitung für den anderen mobilen Transceiver an den dritten Basisstationstransceiver (210) einzustellen, und
wobei das Steuerungsmodul (24) dafür ausgelegt ist, um die Informationen zur Pfadvermittlung über den ersten Basisstationstransceiver (100) dem Datengateway zur Verfügung zu stellen.

5. Die Vorrichtung (20) nach Anspruch 4, wobei das Steuerungsmodul (24) dafür ausgelegt ist, um Informationen zum Status der Nutzlastdatenübertragung an den mobilen Transceiver (400) an den dritten Basisstationstransceiver (210) weiterzuleiten, oder wobei das Steuerungsmodul (24) dafür ausgelegt ist, um Nutzlastdaten zur Übertragung an den mobilen Transceiver (400) von einem Datengateway zu empfangen, wobei das Steuerungsmodul (24) weiterhin dafür ausgelegt ist, um auf die Beendigung der Nutzlastdatenweiterleitung von dem Datengateway an den zweiten Basisstationstransceiver (200) hin eine entsprechende Angabe von dem Datengateway zu erhalten, wobei das Steuerungsmodul (24) weiterhin dafür ausgelegt ist, um Informationen zu der Angabe an den dritten Basisstationstransceiver (210) weiterzuleiten, oder wobei das Steuerungsmodul (24) dafür ausgelegt sind, um dem ersten Basisstationstransceiver (100) Informationen zu einer Bestätigung des Empfangs der Informationen zur Nutzlastdatenweiterleitung zur Verfügung zu stellen.

6. Die Vorrichtung (20) nach Anspruch 4, wobei das Steuerungsmodul (24) dafür ausgelegt ist, um dem ersten Basisstationstransceiver (100) Informationen zu einer Bestätigung des Empfangs weiterer Informationen zu einem sich verändernden Nutzlastdatenempfang zur Verfügung zu stellen.

7. Die Vorrichtung (20) nach Anspruch 6, wobei das Steuerungsmodul (24) dafür ausgelegt ist, um von dem dritten Basisstationstransceiver (210) Informationen zu einem Status der Nutzlastdatenübertragung an den anderen mobilen Transceiver zu empfangen.

8. Verfahren für einen ersten Basisstationstransceiver (100), dafür ausgelegt, um Informationen zu einem sich verändernden Nutzdatenempfang eines mobilen Transceivers (400) von einem zweiten Basisstationstransceiver (200) an einen dritten Basisstationstransceiver (210) an einen mobilen Transreceiver (400) zur Verfügung zu stellen, wobei das Verfahren umfasst:
den Empfang (1100) von Informationen zu einer Signalmessung von dem mobilen Transceiver (400), wobei die Informationen zu der Signalmessung anzeigen, dass der mobile Transceiver (400) fähig ist, Nutzlastdaten von dem dritten Basisstationstransceiver (210) zu empfangen;
das Zurverfügungstellen (1110) von Informationen zur Nutzlastdatenweiterleitung an den zweiten Basisstationstransceiver (200), wobei die Informationen zur Nutzlastdatenweiterleitung anzeigen, dass Nutzlastdaten für den mobilen Transceiver (400) an den dritten Basisstationstransceiver (210) weiterzuleiten sind;
das Zurverfügungstellen (1120) von Informationen zu einer mobilen Rekonfiguration für den mobilen Transceiver (400), wobei die Informationen zu der mobilen Rekonfiguration anzeigen, dass Nutzlastdaten von dem dritten Basisstationstransceiver (210) zu empfangen sind;
das Empfangen von Informationen zu einer Pfadvermittlung vom dritten Basisstationstransceiver (210), wobei die vom zweiten und vom dritten Basisstationstransceiver (200; 210) an den mobilen Transceiver (400) zu übermittelnden Nutzlastdaten von einem Datengateway zur Verfügung gestellt werden;
das Zurverfügungstellen von Informationen zu der Pfadvermittlung an das Datengateway nach dem Zurverfügungstellen der Informationen zu der mobilen Rekonfiguration, wobei die Informationen zu der Pfadvermittlung anzeigen, dass Nutzlastdaten für die Übertragung an den mobilen Transceiver (400) an den dritten Basisstationstransceiver (210) weiterzuleiten sind.

9. Verfahren für einen zweiten Basisstationstransceiver (200), dafür ausgelegt, um von einem ersten Basisstationstransceiver (100) Informationen zur Veränderung des Nutzlastdatenempfangs des mobilen Transceivers (400) zu empfangen, wobei die Informationen zum sich verändernden Nutzdatenempfang eine Veränderung des Nutzdatenempfangs des mobilen Transceivers (400) vom zweiten Basisstationstransceiver (200) zu einem dritten Basisstationstransceiver (210) anzeigen, wobei das Verfahren umfasst:
den Empfang (1200) von Informationen zur Nutzlastdatenweiterleitung an den zweiten Basisstationstransceiver (210), wobei die Informationen zur Nutzlastdatenweiterleitung anzeigen, dass Nutzlastdaten für den mobilen Transceiver (400) an den dritten Basisstationstransceiver (210) weiterzuleiten sind;
das Weiterleiten (1210) der Nutzlastdaten für den mobilen Transceiver (400) an den dritten Basisstationstransceiver (210);
das Empfangen weiterer Informationen zu einem sich verändernden Nutzlastdatenempfang eines anderen mobilen Transceivers von dem ersten Basisstationstransceiver (100), wobei die weiteren Informationen zum sich verändernden Nutzlastdatenempfang anzeigen, dass der Nutzlastdatenempfang des anderen mobilen Transceivers vom dritten Basisstationstransceiver (210) auf den zweiten Basisstationstransceiver (200) zu verändern ist, wobei die weiteren Informationen zum sich verändernden Nutzlastdatenempfang weiterhin anzeigen, dass Nutzlastdaten vom dritten Basisstationstransceiver (210) zur Weiterleitung an den anderen mobilen Transceiver zu empfangen sind.
das Empfangen von Nutzlastdaten vom dritten Basisstationstransceiver (210);
das nach dem Empfang von Nutzlastdaten von dem dritten Basisstationstransceiver (210) zur Weiterleitung an den anderen mobilen Transceiver erfolgende Zurverfügungstellen von Informationen zur Pfadvermittlung zu einem Datengateway über den ersten Basisstationstransceiver (100), wobei die Informationen zur Pfadvermittlung eine Angabe umfassen, die das Datengateway auffordert, Nutzlastdaten für den anderen mobilen Transceivers an den zweiten Basisstationstransceiver (200) weiterzuleiten und die Nutzlastdatenweiterleitung für den anderen mobilen Transceiver an den dritten Basisstationstransceiver (210) einzustellen.

10. Computerprogramm mit einem Programmcode für das Ausführen eines der Verfahren nach den Ansprüchen 8 oder 9, wenn das Computerprogramm auf einem Computer oder in einem Prozessor ausgeführt wird.

## Revendications

1. Appareil (10) pour un premier émetteur-récepteur de station de base (100), l'appareil (10) étant utilisable pour fournir des informations liées au changement de réception de données de charge utile d'un émetteur-récepteur mobilen (400) depuis un deuxième émetteur récepteur de station de base (200) vers un troisième émetteur-récepteur de station de base (210), l'appareil (10) comprenant
une interface (12) utilisable pour communiquer avec le deuxième et le troisième émetteur-récepteur de station de base (200 ; 210) ;
un module émetteur-récepteur (14) utilisable pour communiquer avec l'émetteur-récepteur mobile (400) ; et
un module de commande (16) utilisable pour :
commander l'interface (12) et le module émetteur-récepteur (14),
recevoir des informations liées à une mesure de signal depuis l'émetteur-récepteur mobile (400) en utilisant le module émetteur-récepteur (14), les informations liées à la mesure de signal indiquant que l'émetteur-récepteur mobile (400) est capable de recevoir des données de charge utile depuis le troisième émetteur-récepteur de station de base (210),
fournir des informations liées au transfert de données de charge au deuxième émetteur-récepteur de station de base (200) en utilisant l'interface (12), les informations liées au transfert de données de charge utile indiquant de transférer les données de charge utile pour l'émetteur-récepteur mobile (400) au troisième émetteur-récepteur de station de base (210), et
fournir des informations liées à une reconfiguration mobile vers l'émetteur-récepteur mobile (400) en utilisant le module émetteur-récepteur (14), les informations liées à la reconfiguration mobile indiquant de recevoir les données de charge utile du troisième émetteur-récepteur de station de base (210),
dans lequel les données de charge utile pour transmission depuis le deuxième et le troisième émetteur-récepteur de station de base (200; 210) vers l'émetteur-récepteur mobile (400) sont fournies par une passerelle de données, et dans lequel le module de commande (16) est utilisable pour recevoir des informations liées à un commutateur de chemin depuis le troisième émetteur-récepteur de station de base (210) et pour fournir des informations liées au commutateur de chemin à la passerelle de données en utilisant l'interface (12) après avoir fourni les informations liées à la reconfiguration mobile, les informations liées au commutateur de chemin indiquant de transférer les données de charge utile pour transmission à l'émetteur-récepteur mobile (400) vers le troisième émetteur-récepteur de station de base (210).

2. Appareil (10) selon la revendication 1, dans lequel le module de commande (16) est en outre utilisable pour fournir des informations liées au changement de réception de données de charge utile de l'émetteur-récepteur mobile (400) au troisième émetteur-récepteur de station de base (210) en utilisant l'interface (12), les informations liées au changement de réception de données de charge utile indiquant de recevoir des données de charge utile pour transfert à l'émetteur-récepteur mobile (400) depuis le deuxième émetteur-récepteur de station de base (200).

3. Appareil (10) selon la revendication 2, dans lequel le module de commande (16) est utilisable pour recevoir des informations liées à un accusé de réception des informations liées au transfert de données de charge depuis le deuxième émetteur-récepteur de station de base (200), et dans lequel le module de commande (16) est utilisable pour recevoir des informations liées à un accusé de réception des informations liées au changement de réception de données de charge utile depuis le troisième émetteur-récepteur de station de base (210), et dans lequel le module de commande (16) est utilisable pour fournir les informations liées à la reconfiguration mobile à l'émetteur-récepteur mobile (400) après avoir reçu les informations liées aux accusés de réception depuis le deuxième et le troisième émetteur-récepteur de station de base (200 ; 210).

4. Appareil (20) pour un deuxième émetteur-récepteur de station de base (200), l'appareil (20) étant utilisable pour recevoir des informations liées au changement de réception de données de charge utile d'un émetteur-récepteur mobile (400) depuis un premier émetteur-récepteur de station de base (100), les informations liées au changement de réception de données de charge utile indiquant un changement de réception de données de charge utile de l'émetteur-récepteur mobile (400) depuis le deuxième émetteur-récepteur de station de base (200) vers un troisième émetteur-récepteur de station de base (210), l'appareil (20) comprenant
une interface (22) utilisable pour communiquer avec le premier émetteur-récepteur de station de base (100) et le troisième émetteur-récepteur de station de base (210);
un module de commande (24) utilisable pour :
commander l'interface (22),
recevoir des informations liées au transfert de données de charge utile au troisième émetteur-récepteur de station de base (210) en utilisant l'interface (22), les informations liées au transfert de données de charge utile indiquant de transférer les données de charge utile pour l'émetteur-récepteur mobile (400) au troisième émetteur-récepteur de station de base (210), et
transférer les données de charge utile pour l'émetteur-récepteur mobile (400) au troisième émetteur-récepteur de station de base (210),
dans lequel le module de commande (24) est utilisable pour recevoir des informations supplémentaires liées au changement de réception de données de charge utile d'un autre émetteur-récepteur mobile depuis le premier émetteur-récepteur de station de base (100) en utilisant l'interface (22), les informations supplémentaires liées au changement de réception de données de charge utile indiquant que la réception de données de charge utile de l'autre émetteur-récepteur mobile doit être changée depuis le troisième émetteur-récepteur de station de base (210) vers le deuxième émetteur-récepteur de station de base (200), les informations supplémentaires liées au changement de réception de données de charge utile indiquant en outre de recevoir les données de charge utile pour transférer à l'autre émetteur-récepteur mobilen depuis le troisième émetteur-récepteur de station de base (210),
dans lequel le module de commande (24) est utilisable pour recevoir des données de charge utile depuis le troisième émetteur-récepteur de station de base (210) en utilisant l'interface (22),
dans lequel le module de commande (24) est utilisable pour fournir des informations liées au commutateur de chemin vers une passerelle de données après avoir reçu des données de charge utile pour transférer vers l'autre émetteur-récepteur mobile depuis le troisième émetteur-récepteur de station de base (210), les informations liées au commutateur de chemin comprennent une indication pour la passerelle de données de transférer les données de charge utile pour l'autre émetteur-récepteur mobile vers le deuxième émetteur-récepteur de station de base (200) et pour terminer le transfert de données de charge utile pour l'autre émetteur-récepteur mobile vers le troisième émetteur-récepteur de station de base (210) et
dans lequel le module de commande (24) est utilisable pour fournir les informations liées au commutateur de chemin à la passerelle de données via le premier émetteur-récepteur de station de base (100).

5. Appareil (20) selon la revendication 4, dans lequel le module de commande (24) est utilisable pour transférer des informations liées à un statut de la transmission de données de charge utile vers l'émetteur-récepteur mobile (400) vers le troisième émetteur-récepteur de station de base (210), ou dans lequel le module de commande (24) est utilisable pour recevoir des données de charge utile pour transmission à l'émetteur-récepteur mobile (400) depuis une passerelle de données, dans lequel le module de commande (24) est en outre utilisable pour recevoir une indication depuis la passerelle de données sur une fin de transfert de données de charge utile depuis la passerelle de données vers le deuxième émetteur-récepteur de station de base (200), dans lequel le module de commande (24) est en outre utilisable pour transférer des informations liées à l'indication vers le troisième émetteur-récepteur de station de base (210), ou dans lequel le module de commande (24) est utilisable pour fournir des informations liées à un accusé de réception des informations liées au transfert de données de charge utile vers le premier émetteur-récepteur de station de base (100).

6. Appareil (20) selon la revendication 4, dans lequel le module de commande (24) est utilisable pour fournir des informations liées à un accusé de réception des informations supplémentaires liées au changement de réception de données de charge utile au premier émetteur-récepteur de station de base (100).

7. Appareil (20) selon la revendication 6, dans lequel le module de commande (24) est utilisable pour recevoir des informations liées à un statut de la transmission de données de charge utile à l'autre émetteur-récepteur mobile depuis le troisième émetteur-récepteur de station de base (210).

8. Procédé pour un premier émetteur-récepteur de station de base (100) étant utilisable pour fournir des informations liées au changement de réception de données de charge utile d'un émetteur-récepteur mobile (400) depuis un deuxième émetteur-récepteur de station de base (200) vers un troisième émetteur-récepteur de station de base (210) vers un émetteur-récepteur mobile (400), le procédé comprenant
recevoir (1100) des informations liées à une mesure de signal depuis l'émetteur-récepteur mobile (400), les informations liées à la mesure du signal indiquant que l'émetteur-récepteur mobile (400) est capable de recevoir des données de charge utile depuis le troisième émetteur-récepteur de station de base (210) ;
fournir (1110) des informations liées au transfert de données de charge utile au deuxième émetteur-récepteur de station de base (200), les informations liées au transfert de données de charge utile indiquant de transférer les données de charge utile pour l'émetteur-récepteur mobile (400) au troisième émetteur-récepteur de station de base (210) ;
fournir (1120) des informations liées à une reconfiguration mobile à l'émetteur-récepteur mobile (400), les informations liées à la reconfiguration mobile indiquant de recevoir des données de charge utile depuis le troisième émetteur-récepteur de station de base (210) ;
recevoir des informations liées à un commutateur de chemin depuis le troisième émetteur-récepteur de station de base (210), dans lequel les données de charge utile pour la transmission depuis le deuxième et le troisième émetteur-récepteur de station de base (200 ; 210) vers l'émetteur-récepteur mobile (400) sont fournies par une passerelle de données ;
fournir des informations liées au commutateur de chemin à la passerelle de données après avoir fourni les informations liées à la reconfiguration mobile, les informations liées au commutateur de chemin indiquant de transférer les données de charge utile pour transmission à l'émetteur-récepteur mobile (400) vers le troisième émetteur-récepteur de station de base (210).

9. Procédé pour un deuxième émetteur-récepteur de station de base (200) étant utilisable pour recevoir des informations liées au changement de réception de données de charge utile d'un émetteur-récepteur mobile (400) depuis un premier émetteur-récepteur de station de base (100), les informations liées au changement de réception de données de charge utile indiquant un changement de réception de données de charge utile de l'émetteur-récepteur mobile (400) depuis le deuxième émetteur-récepteur de station de base (200) vers un troisième émetteur-récepteur de station de base (210), le procédé comprenant
recevoir (1200) des informations liées au transfert de données de charge utile vers le troisième émetteur-récepteur de station de base (210), les informations liées au transfert de données de charge utile indiquant de transférer les données de charge utile pour l'émetteur-récepteur mobile (400) vers le troisième émetteur-récepteur de station de base (210) ;
transférer (1210) les données de charge utile pour l'émetteur-récepteur mobile (400) vers le troisième émetteur-récepteur de station de base (210) ;
recevoir des informations supplémentaires liées au changement de réception de données de charge utile d'un autre émetteur-récepteur mobile depuis le premier émetteur-récepteur de station de base (100), les informations supplémentaires liées au changement de réception de données de charge utile indiquant que la réception des données de charge utile de l'autre émetteur-récepteur mobile doit être changée du troisième émetteur-récepteur de station de base (210) au deuxième émetteur-récepteur de station de base (200), les informations liées au changement de réception de données de charge utile indiquant en outre de recevoir les données de charge utile pour transférer vers l'autre émetteur-récepteur mobile depuis le troisième émetteur-récepteur de station de base (210) ;
recevoir des données de charge utile depuis le troisième émetteur-récepteur de station de base (210) ;
fournir des informations liées au commutateur de chemin à une passerelle de données via le premier émetteur-récepteur de station de base (100) après avoir reçu des données de charge utile pour transférer vers l'autre émetteur-récepteur mobile depuis le troisième émetteur-récepteur de station mobile (210), les informations liées au commutateur de chemin comprennent une indication pour la passerelle de données de transférer les données de charge utile pour l'autre émetteur-récepteur mobile vers le deuxième émetteur-récepteur de station de base (200) et de terminer le transfert de données de charge utile pour l'autre émetteur-récepteur mobile vers le troisième émetteur-récepteur de station de base (210).

10. Programme informatique ayant un code de programme pour réaliser un des procédés des revendications 8 ou 9, lorsque le programme informatique est exécuté sur un ordinateur ou processeur.
